# EUROPÄISCHE PATENTSCHRIFT

(11) **EP 3 718 823 B1**
(45) Veröffentlichungstag und Bekanntmachung des Hinweises auf die Patenterteilung: **31.05.2023**
(21) Anmeldenummer: 20020146.5
(22) Anmeldetag: 31.03.2020
(51) Int. Cl.: B60P 3/40

(54) **VORRICHTUNG ZUM HALTEN EINES ENDES EINES LÄNGLICHEN OBJEKTS, INSBESONDERE EINER SELBSTTRAGENDEN LAST, SOWIE EIN DIESE VORRICHTUNG VERWENDENDES FAHRZEUG**
DEVICE FOR HOLDING AN END OF AN ELONGATED OBJECT, IN PARTICULAR A SELF-SUPPORTING LOAD, AND VEHICLE USING THIS DEVICE
DISPOSITIF DE MAINTIEN D'UNE EXTRÉMITÉ D'UN OBJET OBLONG, EN PARTICULIER UNE CHARGE AUTOPORTANTE AINSI QUE VÉHICULE UTILISANT UN TEL DISPOSITIF

(30) Priorität: 01.04.2019 DE 102019002331; 01.04.2019 DE 202019001482 U
(43) Veröffentlichungstag der Anmeldung: 07.10.2020
(73) Patentinhaber: Scheuerle Fahrzeugfabrik GmbH, 74629 Pfedelbach (DE)
(72) Erfinder: Gebert, Martin, 74629 Pfedelbach (DE); Hobusch, Mathias, 74629 Pfedelbach (DE)
(74) Vertreter: Ullrich & Naumann PartG mbB

(56) Entgegenhaltungen:
- EP-A2- 2 719 578
- WO-A1-2004/041589
- DE-U1-202018 106 492

## Beschreibung

Die Erfindung betrifft eine Vorrichtung zum Halten eines Endes eines länglichen Objekts, insbesondere einer selbsttragenden Last, die ein Grundgestell aufweist, an dem eine Halterung, an welcher das längliche Objekt festlegbar ist, schwenkbar angeordnet ist, und die mindestens eine Betätigungseinrichtung aufweist, durch welche die Halterung relativ zum Grundgestell schwenkbar ist, sowie ein Fahrzeug zum Transport eines länglichen Objekts, welches eine Vorrichtung zum Halten eines Endes eines länglichen Objekts aufweist.

Aus der EP 1 558 464 B1 ist eine Vorrichtung zum Halten eines Endes einer selbsttragenden Last, insbesondere eines Mastabschnitts einer Windturbine, bekannt, die ein Fahrwerk aufweist, welches wenigstens eine untere Stütze und wenigstens eine obere Stütze, die in einer Vertikalebene einen spitzen Winkel miteinander einschließen, besitzt. Ein Ende jeder Stütze ist mit dem Fahrwerk verbunden, wobei das andere Ende der wenigstens einen unteren Stütze geeignet ist, auf einen unteren Teil des Endes des Last anzugreifen. Das andere Ende der wenigstens einen oberen Stütze ist derart ausgebildet, dass es an einem oberen Teil des Endes der Last angreifen kann. Wenigstens eine der beiden Stützen ist in ihrer Längsrichtung einstellbar, so dass sich die oberen und unteren Stützen relativ zueinander zu dem Zweck bewegen können, den zwischen ihnen eingeschlossenen Winkel durch eine hydraulische Betätigungseinrichtung, die zwischen den Stützen angeordnet ist, auf die Abmessungen des Endes der Last einzustellen. Die hydraulische Betätigungseinrichtung weist wenigstens einen Hydraulikzylinder auf, wobei ein Ende des Hydraulikzylinders mit der unteren Stütze und ein anderes Ende am anderen Ende der oberen Stütze angreift. Die beiden unteren Stützen der bekannten Vorrichtung sind um eine horizontale Achse schwenkbar auf einem Fahrgestell gelagert, so dass durch entsprechende Mittel die unteren Stützen und somit die mit diesen verbundenen oberen Stützen durch die vorgenannte Einrichtung angehoben und abgesenkt werden können. Um das Ende einer Last aufnehmen zu können, ist es erforderlich, dass am Ende dieser Last entsprechende Aufnahmen vorhanden sind. Die beiden unteren Stützen weisen an ihren Enden zu den beiden an der Last vorgesehenen Aufnahmen komplementär ausgebildete Aufnahmeelemente und die oberen Stütze weist ein weiteres Aufnahmeelement auf, welches komplementär zu einer weiteren Aufnahme, die am Ende der zu bewegenden Last angeordnet ist, ausgebildet ist. Um nun die zu transportierende Last in der bekannten Vorrichtung aufzunehmen, wird die Vorrichtung von dem sie tragenden Fahrzeug vor das Ende der aufzunehmenden Last positioniert. Dann werden die beiden unteren Stützen soweit angehoben, bis ihre Aufnahmen auf gleicher Höhe wie die am Ende der zu transportierenden Last vorgesehenen Aufnahmen liegen. Dann wird das Fahrzeug und somit die an diesem angeordnete Vorrichtung zu dem Ende der zu transportierenden Last bewegt, bis die Aufnahmeelemente der beiden Stützen in die entsprechenden Aufnahmen der Last eingreifen. Dann wird durch die bei der bekannten Vorrichtung vorgesehene Betätigungseinrichtung angehoben und gleichzeitig wird diese Stütze in ihrer Länge verstellt. Das Aufnahmeelement der oberen Stütze wird derart zu der an der zu transportierenden Last angeordneten weiteren Aufnahme gefahren, bis das Aufnahmeelement der oberen Stütze in diese Aufnahme eingreifen kann. Nach Beendigung dieses Vorgangs greifen somit die beiden Aufnahmeelemente der beiden unteren Stützen in die unteren Aufnahmen der Last und das weitere Aufnahmeelement der oberen Stütze in die weitere Aufnahme der Last ein. Die zu transportierende Last ist somit mit der Vorrichtung verbunden und kann mit dem die bekannte Vorrichtung verwendenden Fahrzeug transportiert werden. Die zu transportierenden länglichen Objekte können einen asymmetrischen Querschnitt aufweisen, was zur Folge hat, dass der Gewichtsschwerpunkt des zu transportierenden länglichen Objekts nicht mit seiner Längsachse zusammenfällt. Wird nun das längliche Objekt wie vorstehend beschrieben in der bekannten Vorrichtung aufgenommen, so führt der außerhalb der Längsachse des länglichen Objekts liegende Gewichtsschwerpunkt dazu, dass dieser Schwerpunkt auch außerhalb der Mittelebene der Halterung und somit der diese Halterung verwendeten Vorrichtung liegt. Diese außermittige Lage des Gewichtsschwerpunkt führt in nachteiliger Art und Weise dazu, dass beim Transport des länglichen Objekts Kippkräfte und/oder Kippmomente auftreten können.

Aus der US 7,568,881 B1 ist ein System und eine Vorrichtung zum Beladen und Entladen von Containern bekannt. Das hierzu verwendete Fahrzeug weist eine Vorrichtung zum Halten eines länglichen Objekts, nämlich eines Containers auf, die ein Grundgestell aufweist, auf dem eine Halterung für den Container schwenkbar angeordnet ist. Es ist eine Betätigungsvorrichtung vorgesehen, durch welche die Halterung relativ zum Grundgestell der Vorrichtung verschwenkbar ist. Die Halterung für den Container ist mittels eines Gelenks schwenkbar am Grundgestell der Vorrichtung angeordnet. Mittels eines Adapters kann der Container auf die Halterung gezogen werden.

Aus der DE 20 2018 106 492 U1 ist ein Fahrzeug zum Transportieren eines langen Transportguts wie beispielsweise eines Flügels von Windkraftanlagen bekannt, welches einen vorderen Fahrwerkabschnitt und einen in Fahrzeuglängsrichtung dazu beabstandeten hinteren Fahrwerkabschnitt aufweist, wobei der vordere Fahrwerkabschnitt und der hintere Fahrwerkabschnitt mittels eines teleskopierbaren Längsträgers miteinander verbunden sind. Der vordere Fahrwerkabschnitt ist mit einem verschwenkbaren Adapter zur Aufnahme des Windflügels versehen. Dieser Ist in einem oberen Bereich an einem Vertikalträger drehbar gelagert, dessen Basis zwischen einem vorderen Teil und einem hinteren Teil des vorderen Fahrwerkabschnitts gehalten Ist. Zur Stabilisierung des Vertikalträgers sind zwei Stützen vorgesehen, deren oberes Ende Jeweils Im oberen Bereich des Vertikalträgers angreift und deren unteres Ende jeweils In einem vorderen Bereich des vorderen Teils des vorderen Fahrwerkabschnitts verankert Ist. Zur Verschwenkung des Adapters ist ein hydraulischer Schwenkantrieb vorgesehen, der In einem unteren Bereich des verschwenkbaren Adapters angreift.

Die gattungsgemäße EP 2 719 578 A2 beschreibt ein Schwerlast-Transportfahrzeug zum Transport eines länglichen Objekts, insbesondere eines Rotors, welches eine Rotorblatthalterung aufweist, die mittels einer Schwenkeinrichtung In Form eines Hydraulikzylinders in Bezug zu einer auf dem Fahrgestell des Schwerlast-Transportfahrzeugs montierten Trägereinheit verschwenkbar Ist. Auf der Halterung Ist ein Kupplungselement angeordnet, welches einen Schraubflansch aufweist, an dem das kurze Ende des Rotorblatts festgeschraubt werden kann.

Es ist daher Aufgabe der vorliegenden Erfindung, eine Vorrichtung der eingangs genannten Art derart weiterzubilden, dass eine asymmetrische Lage des Gewichtsschwerpunkts des zu transportierenden länglichen Objekts zumindest teil-weise kompensiert werden kann. Außerdem soll ein für die erfindungsgemäße Vorrichtung geeignetes Fahrzeug geschaffen werden.

Diese Aufgabe wird erfindungsgemäß dadurch gelöst, dass die Vorrichtung einen das längliche Objekt haltenden, an der Halterung angeordneten Adapter aufweist, dass der Adapter in mindestens einer außermittigen Position an der Halterung und zu dieser und somit zu einer Mittelebene der Vorrichtung versetzt anordbar ist, und dass der Adapter in diskreten Abständen oder kontinuierlich veränderbar außermittig an der Halterung anordbar ist.

Durch die erfindungsgemäße Maßnahme wird in vorteilhafter Art und Weise eine Vorrichtung zur Halterung eines Endes eines länglichen Objekts geschaffen, welche sich dadurch auszeichnet, dass der das längliche Objekt halternde Adapter außermittig zu der vorzugsweise als Rahmen ausgebildeten Halterung der Vorrichtung angeordnet werden kann. Es ist somit in vorteilhafter Art und Weise möglich, das zu transportierende längliche Objekt in der erfindungsgemäßen Vorrichtung derart anzuordnen, dass sein Gewichtsschwerpunkt näher an der Mittelebene der erfindungsgemäßen Vorrichtung liegt. Hierdurch werden in vorteilhafter Art und Weise durch eine asymmetrische Gewichtsverteilung des zu transportierenden Objekts bewirkte Kippkräfte und/oder Kippmomente reduziert und somit die Transportsicherheit erhöht.

Eine vorteilhafte Weiterbildung der Erfindung sieht vor, dass der Adapter und die Halterung der Vorrichtung durch eine Schwenkverbindung miteinander verbunden sind. Eine derartige Maßnahme erlaubt es in vorteilhafter Art und Weise, dass der beim Be- und/oder Entladen des länglichen Objekts mit diesem bereits verbundene Adapter leichter an der Halterung der erfindungsgemäßen Vorrichtung angeordnet werden kann.

Eine weitere vorteilhafte Weiterbildung der Erfindung sieht vor, dass an der Halterung der erfindungsgemäßen Vorrichtung ein oder mehrere Anschläge angeordnet sind, welche den Adapter beaufschlagen und derart ein oder mehrere Gegenlager für diesen ausbilden. Eine derartige Maßnahme besitzt den Vorteil, dass hierdurch regelmäßig lediglich Druckkräfte auf den Adapter einwirken.

Das erfindungsgemäße Fahrzeug zum Transport eines länglichen Objekts zeichnet sich dadurch aus, dass zum Halten eines Endes des länglichen Objekts die erfindungsgemäße Vorrichtung verwendet wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine schematische Darstellung eines Fahrzeug-Verbunds zum Transportieren eines länglichen Objekts, insbesondere einer selbsttragenden Last,
- Figur 2: ein Ausführungsbeispiel einer Vorrichtung zum Halten eines Endes des länglichen Objekts in einer abgesenkten Stellung,
- Figur 3: das Ausführungsbeispiel der Vorrichtung in einer angehobenen Stellung,

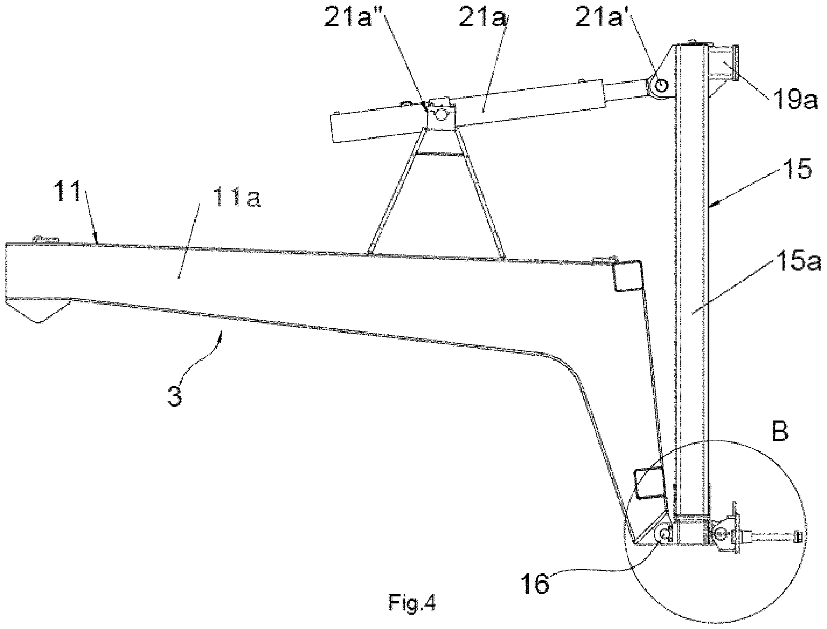

- Figur 4: eine Seitenansicht der Vorrichtung gemäß Figur 2,

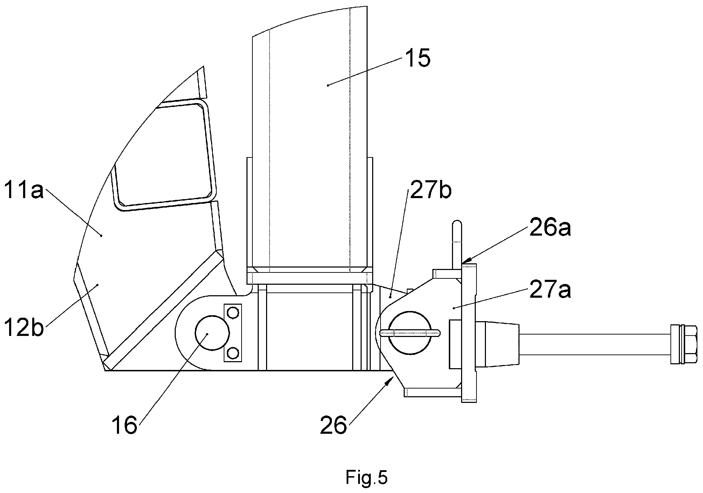

- Figur 5: ein Detail B der Figur 4
- Figur 6: ein Ausführungsbeispiel eines Adapters der Vorrichtung,
- Figur 7: ein Detail A der Figur 6.
- Figur 8: ein Ausführungsbeispiel eines nachlaufenden Fahrzeugs zusammen mit einem Klemmadapter für das zu transportierende längliche Objekt
- Figur 9: das Ausführungsbeispiel der Figur 8 ohne den vorgenannten Klemmadapter
- Figur 10: eine Heckansicht des Ausführungsbeispiels der Figur 8 zusammen mit einem Ausführungsbeispiel einer Lastauflage in ihrer Neutralposition
- Figur 11: das Ausführungsbeispiel der Figur 10 mit einer ausgelenkten Lastauflage
- Figur 12: eine dreidimensionale Darstellung des Ausführungsbeispiels der Lastauflage.

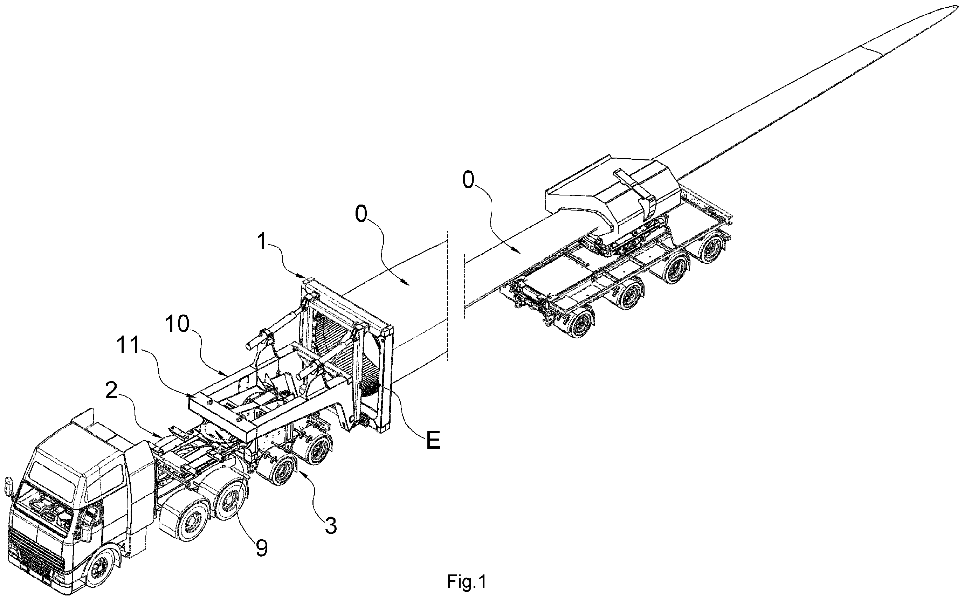

In Figur 1 ist ein allgemein mit 1 bezeichneter Fahrzeug-Verbund dargestellt, wie er weithin verbreitet zum Transport eines länglichen Objekts O, insbesondere einer selbsttragenden Last wie eines Mastabschnitts eines Rotorblatts einer Windturbine, verwendet wird. Der Fahrzeug-Verbund 1 weist ein an und für sich bekanntes und daher nicht mehr näher beschriebenes Zugfahrzeug 2 auf, an dem eine allgemein mit 10 bezeichnete Vorrichtung zum Halten eines Endes E des länglichen Objekts O, wie z. B. eines Rotorblatts oder eines Mastabschnitts einer Windturbine, befestigbar ist. Der Fahrzeug-Verbund 1 besitzt des Weiteren ein weiteres Fahrzeug 50, welches im hier beschriebenen Ausführungsbeispiel exemplarisch als nachlaufender Anhänger ausgebildet ist, auf dem das zu transportierende Objekt O aufliegt. Ein derartiger Fahrzeug-Verbund 1 ist bekannt und muss daher nicht mehr näher beschrieben werden.

Die Vorrichtung 10 kann unmittelbar am Zugfahrzeug 2 angebracht sein. Es ist aber auch möglich, dass diese - wie beim hier beschriebenen Ausführungsbeispiel - auf einem Zwischenwagen 3 angeordnet ist. Da es für das hier beschriebene Ausführungsbeispiel ohne Bedeutung ist, ob die Vorrichtung 10 direkt am Zugfahrzeug 2 oder auf einem Zwischenwagen 3 angeordnet ist, orientiert sich nachfolgende Beschreibung an dem in den Figuren dargestellten Fall.

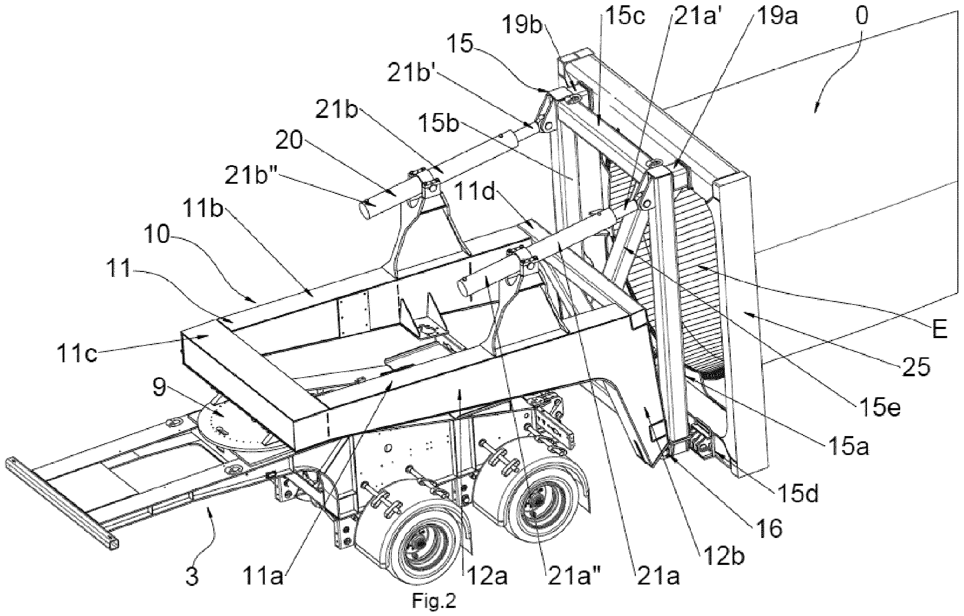

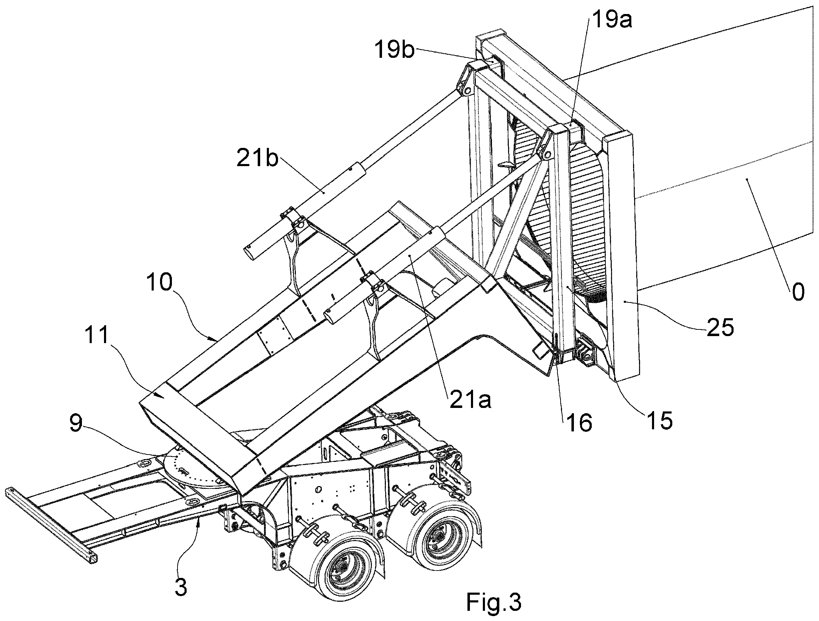

Die vorzugsweise über eine Drehanordnung 9 drehbar auf dem Zwischenwagen 3 angeordnete Vorrichtung 10 weist ein Grundgestell 11 auf, welches durch eine bekannte und daher nicht mehr näher beschriebene Betätigungseinrichtung anhebbar und absenkbar ist. Die Figur 2 zeigt die Vorrichtung 10 in ihrer abgesenkten und die Figur 3 in ihrer angehobenen Stellung. Das Grundgestell 11 weist zwei Längsträger 11a und 11b auf, welche durch Querträger 11c und 11d miteinander verbunden sind. Vorzugsweise ist jeder der beiden Längsträger 11a, 11b L-förmig ausgebildet und weist jeweils einen ersten Abschnitt 12a und einen hierzu geneigt verlaufenden zweiten Abschnitt 12b auf. Vorzugsweise ist vorgesehen, dass der Winkel zwischen den beiden Abschnitten 12a und 12b ein stumpfer Winkel einschließlich 90° ist.

An diesem Grundgestell 11 und insbesondere an den beiden Längsträgern 11a, 11b ist eine im hier beschriebenen Ausführungsbeispiel als Rahmen ausgebildete Halterung 15 vorgesehen, die über zwei Gelenke 16 schwenkbar angeordnet ist. Die Verwendung eines Rahmens zur Ausbildung der Halterung 15 wird zwar bevorzugt, ist aber nicht zwingend. Anstelle des Rahmens kann auch eine Platte oder eine ähnliche Konstruktion verwendet werden. Im folgendem soll aber dieses Ausführungsbeispiel anhand des in den Figuren dargestellten Rahmens beschrieben werden, die dazu gemachten Ausführungen gelten für die entsprechende Halterung 15 analog. Der Rahmen weist zwei Längsträger 15a und 15b und zwei diese beiden Längsträger 15a, 15b verbindende Querträger 15c, 15d auf. Vorzugsweise kann vorgesehen sein, dass zur Versteifung des Rahmens ein Stützträger 15e vorgesehen ist. Dem Fachmann ist aus der nachfolgenden Beschreibung ersichtlich, dass es für gewisse Anwendungsfälle durchaus ausreichend ist, wenn der Rahmen nur die beiden Längsträger 15a und 15b aufweist, die Querträger 15c und 15d sowie der Stützträger 15e sind zwar vorteilhaft, aber nicht zwingend.

Am Grundgestell 11 der Vorrichtung 10 ist eine Betätigungseinrichtung 20 vorgesehen, durch welche der Rahmen um die durch die beiden Gelenke 16 definierte Schwenkachse schwenkbar ist. Beim beschriebenen Ausführungsbeispiel weist die Betätigungseinrichtung 20 zwei Teleskopzylinder 21a, 21b, vorzugsweise Hydraulikzylinder, auf, die mit ihrem ersten Ende 21a' und 21b` am Rahmen angreifen und deren zweite Enden 21a" und 21b" am Grundgestell 11 der Vorrichtung 10 festgelegt sind. Durch eine Längenveränderung der Teleskopzylinder 21a, 21b ist somit die Halterung 15, hier also der Rahmen, um die Gelenke 16 relativ zum Grundgestell 11 schwenkbar. Das Grundgestell 11 der Vorrichtung 10 und somit der Rahmen kann durch eine an und für sich bekannte und daher in den Figuren nicht gezeigte Einrichtung angehoben und abgesenkt werden.

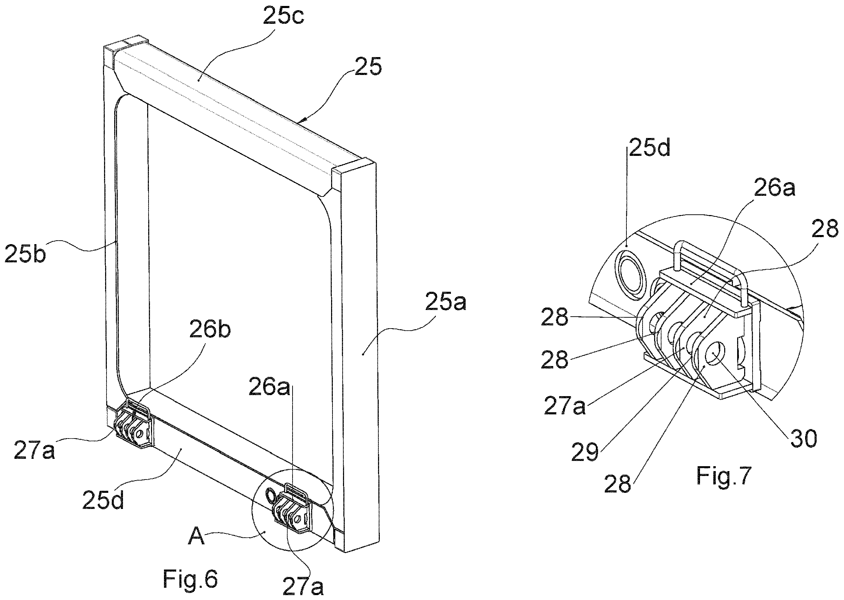

Am Rahmen der Vorrichtung 10 ist ein Adapter 25 - wie nachstehend beschrieben - verschiebbar und vorzugsweise verschwenkbar angeordnet. Dieser Adapter 25 ist in Figur 6 dargestellt und hier rahmenartig ausgebildet. Er weist Längsträger 25a und 25b sowie Querträger 25c und 25d auf. Der Adapter 25 ist derart ausgebildet, dass er am Ende E des länglichen Objekts O befestigbar ist. Die genaue Art und Weise der Befestigung des Adapters 25 am Ende E des länglichen Objekts O ist hier ohne Bedeutung. Im europäischen Patent EP 2 719 578 B1 der Anmelderin ist eine bevorzugte Ausgestaltung eines derartigen Adapters beschrieben.

Wie aus den vorgenannten Figuren ersichtlich ist, sind vorzugsweise der Adapter 25 und die Halterung 15, im hier gezeigten Ausführungsbeispiel also der Rahmen, in der Vorrichtung 1 durch eine Schwenkeinrichtung 26 miteinander verbunden, so dass der Adapter 25 relativ zum Rahmen um eine Schwenkachse beweglich ist. In dem gezeigten Fall weist die Schwenkeinrichtung 26 zwei Schwenkeinheiten 26a und 26b auf, wobei jede Schwenkeinheiten 26a, 26b zwei Schwenkelemente 27a und 27b besitzt. Im beschriebenen Ausführungsbeispiel sind im unteren Bereich des Adapters 25, hier am unteren Querträger 25d, die beiden Schwenkelemente 27a der Schwenkeinheiten 26a und 26b vorgesehen, welche mit den zu diesen komplementär ausgebildeten Schwenkelementen 27b der Schwenkeinheiten 26a und 26b zusammenwirken, welche am Rahmen angeordnet sind.

Bei einem länglichen Objekt O mit einer symmetrischen Gewichtsverteilung, bei dem also der Gewichtsschwerpunkt des länglichen Objekts O auf seiner Längsachse oder nur gering beabstandet von dieser liegt, ist der Adapter 25 an der Halterung 15 mittig angeordnet, um keine die Transportstabilität beeinflussenden Kippmomente um die Längsachse des Zwischenwagens 3 auftreten zu lassen.

Die Längsachse des zu transportierenden Objekts O liegt also etwa in einer Mittelebene des Adapters 25 und somit der Vorrichtung 10. Dies ist oft ausreichend, um einen stabilen Transport des länglichen Objekts O zu ermöglichen.

Insbesondere bei einem Transport von länglichen Objekten O mit einem asymmetrischen Querschnitt, wie zum Beispiel einem Rotorblatt einer Windkraftanlage, liegt aber der Gewichtsschwerpunkt dieses länglichen Objekts O nicht auf seiner Längsachse, sondern seitlich versetzt zu dieser, also außermittig. Bei einem mittig angeordneten Adapter 25 würde die Vorrichtung 10 somit einseitig belastet werden, da der Gewichtsschwerpunkt des länglichen Objekts O nicht in ihrer Mittelebene liegt. Es können somit Kippmomente um die Längsrichtung der Vorrichtung 10 auftreten. Das hat dann zur Folge, dass hierdurch die Kippstabilität zumindest der Vorrichtung 10 und folglich auch diejenige des die Vorrichtung 10 tragenden Fahrzeugs, im beschriebenen Ausführungsbeispiel also die Kippstabilität des Zwischenwagens 3, vermindert ist.

Bei dem beschriebenen Ausführungsbeispiel der Vorrichtung 10 ist nun vorgesehen, dass der Adapter 25 nicht nur mittig, sondern auch außermittig an der Halterung 15, also hier am Rahmen, anordbar ist. Vorzugsweise ist hierzu vorgesehen, dass die Verbindung zwischen Adapter 25 und Halterung 15 so ausgestaltet ist, dass sie nicht nur eine mittige, sondern auch mindestens eine außermittige Anordnung des Adapters 25 an der Halterung 15 ermöglicht.

Bevorzugt wird hierzu, dass die den Adapter 25 und die Halterung 15 verbindende Schwenkeinrichtung 26 und somit die beiden Schwenkeinheiten 26a, 26b derart ausgestaltet sind, dass sie nicht nur vorzugsweise ein Schwenken des Adapters 25 um die durch die Schwenkeinrichtung 26 definierte Schwenkachse, sondern auch und insbesondere ein Versetzen des Adapters 25 in Richtung dieser Schwenkachse ermöglichen. Eine derartige Maßnahme besitzt den Vorteil, dass in einfacher Art und Weise die vorstehend angesprochene asymmetrische Anordnung des Adapters 25 auf der Halterung 15 ermöglicht wird, um damit eine in Bezug auf die Längsachse des länglichen Objekts O vorhandene asymmetrische Gewichtsverteilung auszugleichen, indem der das Objekt O tragende Adapter 25 ebenfalls außermittig angeordnet wird. Da nun der Adapter 25 versetzt zur Halterung 15 und somit zu der Mittelebene der Vorrichtung 10 angeordnet ist, also der Adapter 25 außermittig an der Halterung 15 montiert ist, kann in vorteilhafter Art und Weise erreicht werden, dass auch bei einem außerhalb der Längsachse des länglichen Objekts O liegenden Schwerpunkt das längliche Objekt O derart in der Vorrichtung 10 positioniert werden kann, dass sein Schwerpunkt in der Mitte der Vorrichtung 10 oder zumindest nahe zu dieser liegt. Hierdurch wird in vorteilhafter Art und Weise die Kippstabilität der Vorrichtung 10 und somit des Fahrzeug-Verbunds 1 und folglich dessen Transportsicherheit erhöht.

Am einfachsten ist eine derartige außermittige Anordnung des Adapters 25 zu erreichen, dass an der Halterung 15 und/oder am Adapter 25 eine Anzahl von unterschiedlichen Befestigungsmöglichkeiten für die Schwenkeinheiten 26a und/oder 26b vorgesehen sind, wie zum Beispiel eine Anzahl von in der Querrichtung der Halterung 15 und/oder des Adapters 25 verlaufende Bohrungen, welche eine außermittige Anordnung der beiden Schwenkeinheiten 26a, 26b erlauben. Eine derartige Ausgestaltung besitzt den Vorteil einer besonders einfachen Bauweise.

Bei dem beschriebenen Ausführungsbeispiel ist vorgesehen, dass die Schwenkeinrichtung 26 derart ausgebildet ist, dass der Adapter 25 an der Halterung 15 in unterschiedlichen Positionen mittig und außermittig und vorzugsweise schwenkbar befestigt werden kann, ohne dass es erforderlich ist, die Schwenkeinheiten 26a und/oder 26b hierzu von der Halterung 15 und/oder vom Adapter 25 zu lösen und in einer unterschiedlichen Position neu zu montieren.

Beim hier beschriebenen Ausführungsbeispiel wird dies dadurch erreicht, dass die den Adapter 25 und die Halterung 15 schwenkbar verbindenden Schwenkeinheiten 26a, 26b jeweils als Lamellen-Kupplungen ausgebildet sind, wie dies am besten aus den Figuren 6 und 7 ersichtlich ist. Die Figur 6 zeigt in einer isometrischen Darstellung die der Halterung 15 zugewandte Seite des Adapters 25 und die Figur 7 ein Detail A der Figur 6. Man erkennt aus diesen Figuren, dass die Schwenkelemente 27a der Schwenkeinheiten 26a, 26b Lamellen 28 aufweisen, zwischen denen jeweils ein Zwischenraum 29 vorhanden ist. Die Schwenkelemente 27b, welche am Rahmen angeordnet sind, weisen ebenfalls eine Lamelle oder mehrere durch Zwischenräume getrennte Lamellen auf. Durch ein Einschieben der Lamellen 28 der Schwenkelemente 27a in die Zwischenräume zwischen den Lamellen der Schwenkelemente 27b und durch ein Verriegeln der dann ineinandergreifenden Schwenkelemente 27a, 27b, zum Beispiel durch Einschieben eines Bolzens in die Öffnungen 30 der jeweiligen Schwenkeinheit 26a, 26b, wird die Schwenkverbindung 26 zwischen dem Rahmen und dem Adapter 25 ausgebildet.

Um nun eine zu einer mittigen Position versetzte Anordnung des Adapters 25 auf der Halterung 15 zu ermöglichen, ist beim beschriebenen Ausführungsbeispiel vorgesehen, dass mindestens eines der beiden Schwenkelemente 27a in mindestens zwei unterschiedlichen Positionen in das mit diesen zusammenwirkende Schwenkelement 27b eingesetzt werden kann, so dass hierdurch eine außermittige Anordnung des Adapters 25 auf der Halterung 15 erreichbar ist.

Es wird aber bevorzugt, dass es die beschriebene Schwenkeinrichtung 26 erlaubt, den Adapter 25 in mehr als einer außermittigen Position relativ zur Halterung 15 zu positionieren. Hierzu wird bevorzugt, dass die an dem Adapter 25 angeordneten Schwenkelemente 27a jeweils eine hinreichend große Zahl von jeweils durch einen Zwischenraum 29 getrennten Lamellen 28 aufweisen, in welche die entsprechenden Lamellen der zu diesen Schwenkelementen 27a komplementären Schwenkelemente 27b eingreifen können.

Beim beschriebenen Ausführungsbeispiel ist exemplarisch vorgesehen, dass - wie aus den Figuren 6 und 7 ersichtlich - die Schwenkelemente 27a jeweils vier Lamellen 28 besitzen. Nimmt man nun an, dass die Schwenkelemente 27b welche an der Halterung 15 angeordnet sind, jeweils zwei Lamellen besitzen, so werden dann vier unterschiedliche Positionen ausgebildet, in denen der Adapter 25 an der Halterung 15 befestigt werden kann. Dem Fachmann ist aus der vorstehenden Beschreibung ersichtlich, dass die hier aufgeführte Konstellation von vier Lamellen 28 an den Schwenkelementen 27a des Adapters 25 und zwei Lamellen an den Schwenkelementen 27b nur exemplarischen Charakter besitzt. Es können, je nach Anwendungsfall, mehr oder weniger durch Zwischenräume 29 getrennte Lamellen 28 der Schwenkelemente 27a und/oder mit diesen zusammenwirkende Lamellen der Schwenkelemente 27b vorgesehen sein, so dass - entsprechend der Anzahl der Lamellen 28 der Schwenkelemente 27a und der Lamellen der Schwenkelemente 27b - mindestens zwei, drei oder mehr als drei unterschiedliche Positionen, in denen der Adapter 25 versetzt angeordnet werden kann, ausgebildet werden.

Es ist auch möglich, die vorstehend genannte Ausgestaltung umzukehren, das heißt, dass die an der Halterung 15 angeordneten Schwenkelemente 27b eine größere Zahl von Lamellen aufweisen als die am Adapter 25 vorhandenen Lamellen 28. Es ist daher nicht zwingend, dass - wie beim hier beschriebenen Ausführungsbeispiel - an dem Adapter 25 mehr Lamellen 28 vorgesehen sind als an der Halterung 15. Es ist natürlich auch möglich, dass an der Halterung 15 zwei oder mehr Lamellen, die durch Zwischenräume getrennt sind, vorgesehen sind, und am Adapter 25 nur eine einzige Lamelle 28 oder zwei oder mehr durch Zwischenräume 29 getrennte Lamellen 28 vorgesehen sind. Es ist somit ausreichend, dass mindestens ein Schwenkelement 27a und/oder mindestens ein hierzu komplementäres Schwenkelement 27b mindestens zwei durch einen Zwischenraum getrennte Lamellen aufweist, so dass hierdurch der Adapter 25 an der Halterung 15 in mindestens zwei Positionen, von denen eine eine außermittige Position ist, anordbar ist.

Dem Fachmann ist aus der obigen Beschreibung auch ersichtlich, dass die hier dargestellte beschriebene Art und Weise, wie eine versetzte Anordnung des Adapters 25 an der Halterung 15 realisiert ist, nur einen exemplarischen Charakter besitzt. Vielmehr ist eine Vielzahl von derartigen Ausgestaltungen möglich. Es ist zwar nicht bevorzugt, aber möglich, dass auf die Schwenkbarkeit des Adapters 25 relativ zur Halterung 15 verzichtet wird. Wesentlich ist, dass der Adapter 25 außermittig an der Halterung 15 angeordnet werden kann.

Es ist auch möglich, dass vorgesehen ist, dass der Adapter 25 nicht, wie bei der vorstehend beschriebenen Ausgestaltung - in diskreten Abständen an der Halterung 15 in unterschiedlichen Positionen befestigbar ist. Vielmehr ist es auch möglich, eine kontinuierlich veränderbare außermittige Anordnungsmöglichkeit des Adapters 25 vorzusehen. Eine derartige kontinuierliche Anordnung der Schwenkelemente 27a, 27b ist z. B. dadurch möglich, indem zum Beispiel mindestens einer dieser Schwenkelemente auf einem verschiebbaren Schlitten gelagert ist.

Auch eine Kombination der vorgenannten Möglichkeiten, insbesondere unterschiedliche Befestigungspunkte an der Halterung 15 und/oder am Adapter 25 und gleichzeitig eine Ausgestaltung der Schwenkelemente 27a, 27b wie vorstehend beschrieben vorzusehen, ist möglich.

Wie am besten aus den Figuren 2 und 3 ersichtlich, weist die Halterung 15 an ihrer oberen, den Schwenkeinheiten 26a, 26b gegenüberliegenden Seite Anschlagelemente 19a und 19b auf, an denen sich der obere Teil des Adapters 25 abstützt. Diese Anschlagelemente 19a, 19b bilden somit ein Widerlager für den Adapter 25 aus. Eine derartige Konstruktion besitzt den Vorteil, dass auf den Adapter 25 nur Druckkräfte einwirken, er also nicht dafür ausgelegt sein muss, auch Zugkräfte aufzunehmen. Ein weiterer Vorteil einer derartigen Konstruktion, nämlich, dass die Halterung 15 mit dem Adapter 25 durch an der unteren Seite der Halterung 15 und folglich an der Unterseite des Adapters 25 angeordnete Schwenkeinheiten 26a, 26b verbunden ist, ist darin zu sehen, dass zum Koppeln vom Adapter 25 und Halterung 15 Montagearbeiten nur im unteren Bereich derselben vorgenommen werden müssen. Beachtet man nun, dass der typische Durchmesser von länglichen Objekten wie Rotorblättern einige Meter beträgt, so bringen die vorgenannten Maßnahmen den Vorteil mit sich, dass Montagearbeiten im oberen Bereich des das zu transportierenden Objekt O aufnehmenden Adapters 25 und/oder des Rahmens entfallen können, was die Arbeitssicherheit beträchtlich erhöht.

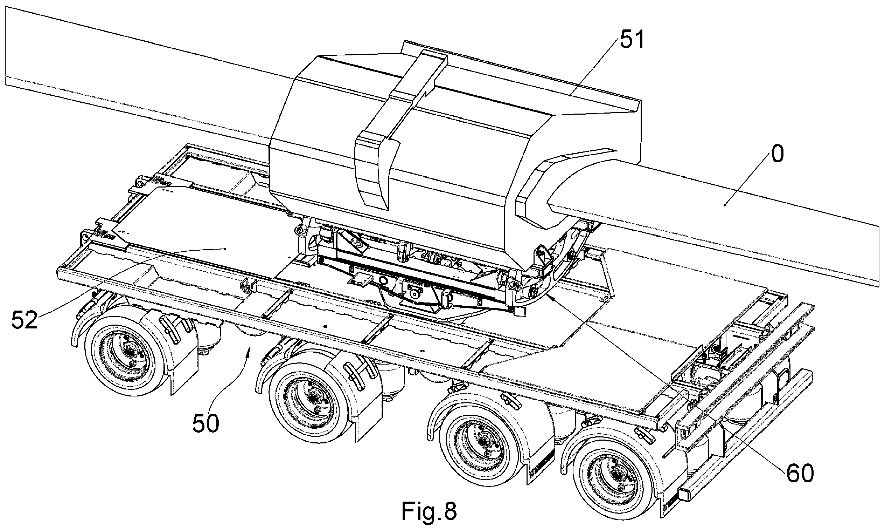

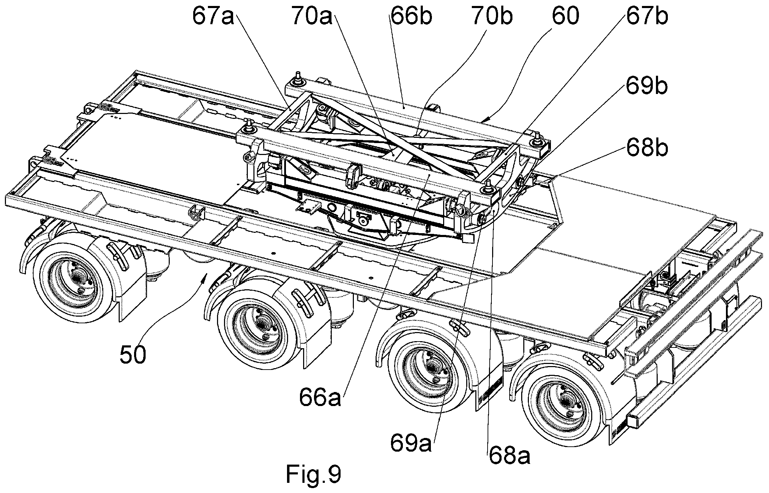

Das in Figur 1 dargestellte, den hinteren Bereich des zu transportierenden länglichen Objekts O tragende Fahrzeug 50, das hier als ein nachlaufender Anhänger ausgebildet ist, ist nun in den Figuren 8 und 9 dargestellt. Die Figur 8 zeigt das Fahrzeug 50 zusammen mit dem länglichen Objekt O, welches in einem an und für sich bekannten Klemmadapter 51 gehalten ist. Auf einem ebenfalls an und für sich bekannten und daher nicht mehr näher beschriebenen Chassis 52 des Anhängers 50 ist drehbar eine Lastauflage 60 angeordnet, welches ihrerseits den Klemmadapter 51 für das längliche Objekt O trägt.

Aus Gründen einer übersichtlicheren Darstellung ist in der Figur 9 das längliche Objekt O sowie das dieses längliche Objekt O auf dem Anhänger 50 haltende Klemmadapter 51 nicht gezeigt. Ein derartiger Aufbau ist bekannt und muss daher nicht mehr näher beschrieben werden.

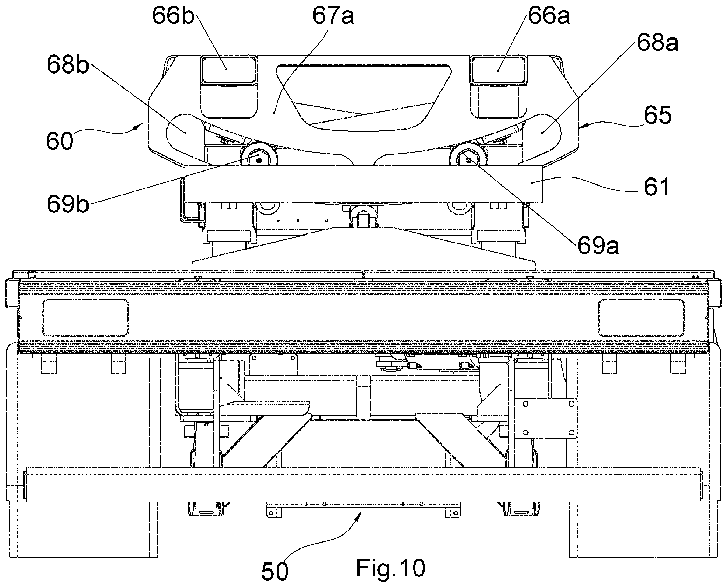

Die Figuren 10 bis 12 zeigen nun eine Lastauflage 60, welche in vorteilhafter Art und Weise eine Kompensation oder zumindest eine Verringerung von beim Transport auf das längliche Objekt O einwirkenden Torsionskräften und/oder Torsionsmomente ermöglicht: Durchfährt z. B. die mit dem Zugfahrzeug 2 gekoppelte Vorrichtung 10 eine Kurve mit einer zum Anhänger 50 geneigten Fahrbahn treten zwangsläufig Drehbewegungen um die Längsachse der Ladung auf, welche sich bei einer starren Einspannung der Ladung auf dem Anhänger 50 als Torsionsmomente bemerkbar machen. Der Klemmadapter 51 ist bei den bekannten Fahrzeugen ebenfalls unbeweglich mit der Lastauflage 60 verbunden, so dass das längliche Objekt O in diesem Bereich ebenfalls keine Ausgleichsbewegung durchführen kann, mit der Folge, dass die Struktur beim Transport des länglichen Objekts O dessen Struktur belastende Momente und Kräfte auftreten können.

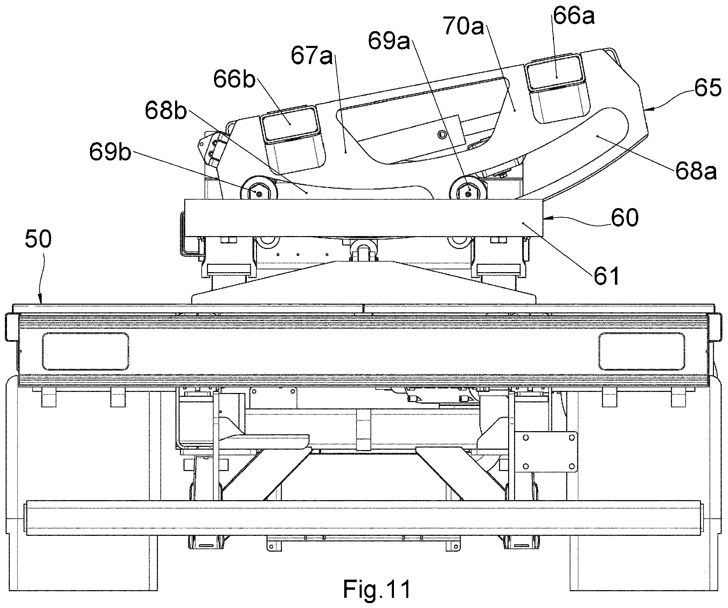

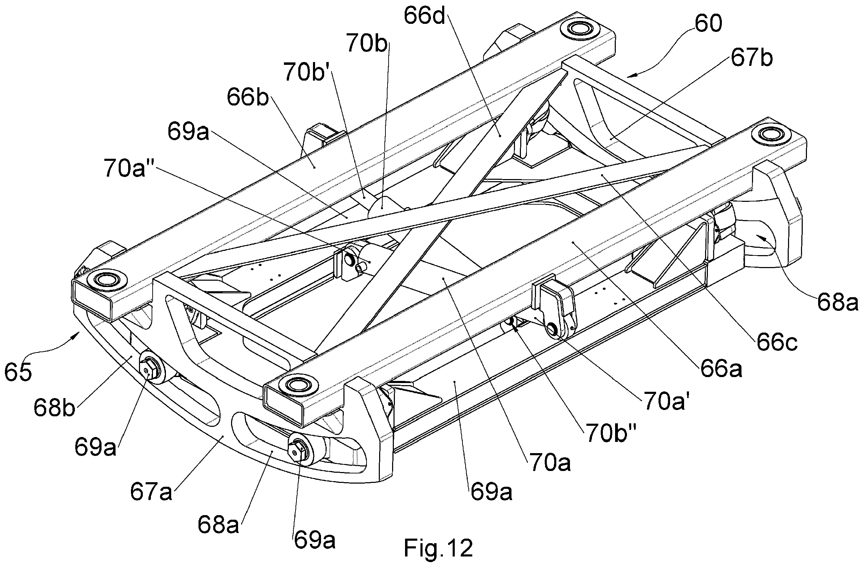

Die beschriebene Lastauflage 60 ist nun derart ausgebildet, dass derartigen Momenten und/oder Kräften in vorteilhafter Art und Weise entgegengewirkt oder diese zumindest reduziert, wenn nicht kompensiert werden können, indem die Lastauflage 60 eine Ausgleichsbewegung des länglichen Objekts O zulässt. Wie am besten aus den Figuren 10 und 11 ersichtlich ist, weist die Lastauflage 60 einen Unterbau 61 auf, der in der Regel um eine Hochachse drehbar auf dem Chassis 52 des Fahrzeugs 50 angeordnet ist. Wie aus den Figuren 10 und 11 ersichtlich ist, ist auf diesem Unterbau 61 ein relativ zu diesem schwenkbares Lastbett 65 angeordnet, dessen Ausgestaltung in Figur 12 dargestellt ist. Das vorzugsweise rahmenförmig ausgebildete Lastbett 65 weist zwei Lastträger 66a und 66b auf, welche durch quer verlaufende Träger 66c, 66d versteift sind, so dass durch die vorgenannten Bauelemente die eigentliche Lastauflage ausgebildet ist, auf welche der Klemmadapter 51 angeordnet werden kann. An den Schmalseiten des Lastbettes 65 ist jeweils eine Führungskulisse 67a bzw. 67b angeordnet, welche Führungsschlitze 68a und 68b besitzen. In den Führungsschlitzen 68a, 68b der beiden Führungskulissen 67a ist ein Längsträger 69a und in den Führungskulissen 67b ein Längsträger 69b verschiebbar geführt. Wie aus den Figuren 10 und 11 ersichtlich, sind die beiden Längsträger 69a, 69b im Unterbau 61 der Lastauflage 60 angeordnet.

Durch die beschriebene Konstruktion kann also der Oberbau der Lastauflage 60, also das Lastbett 65, relativ zu deren Unterbau 61 eine vorzugsweise kreisförmige Schwenkbewegung durchführen. Dies bewirkt, dass das längliche Objekt O nun nicht mehr - wie bei den bekannten Fahrzeugen - starr in dem Fahrzeug 50 geklemmt ist, sondern es aufgrund der beweglichen Anordnung des Lastbetts 65 in Bezug auf den Unterbau 61 der Lastauflage 60 und somit in Bezug auf das Fahrzeug 50 eine Ausweichbewegung durchführen kann, so dass dem Auftreten von Torsionsmomenten und/oder -kräften, welche insbesondere beim Transport des länglichen Objekts O entstehen können, entgegengewirkt wird.

Es wird bevorzugt, dass die Lastauflage 60 derart ausgebildet ist, dass der Schwerpunkt des zu transportierenden länglichen Objekts O in der Nähe des Mittelpunkts der auf einer Kreisbahn verlaufenden Schwenkbewegung des Lastbettes 65 liegt. Dies hat zur Folge, dass auch bei einer Auslenkung des länglichen Objekts O, also bei einem Auslenken des Lastbettes 65 aus seiner Mittellage, der Gewichtsschwerpunkt des länglichen Objekts O nicht verändert wird, so dass keine zusätzliche Belastung auf die Lastauflage 60 und somit auf das Fahrzeug 50 auftritt.

Wie aus den Figuren 10 bis 12 des Weiteren ersichtlich ist, weist die Lastauflage 60 zwei Zylinder 70a und 70b auf. Ein erstes Ende 70a` des ersten Zylinders 70a ist mit dem Lastträger 66a und sein zweites Ende 70a" mit dem diesem Lastträger 66a schräg gegenüberliegenden Längsträger 69b verbunden. In entsprechender Art und Weise ist ein erstes Ende 70b` des zweiten Zylinders 70b mit dem zweiten Lastträger 66b und das zweite Ende 70b" des zweiten Zylinders 70b mit dem den Lastträger 66b schräg gegenüberliegenden Längsträger 69a verbunden. Die beiden Zylinder 70a und 70b sind durch einen geeigneten Hydraulikkreislauf miteinander verbunden. Beim Aufladen des länglichen Objekts O auf das Fahrzeug 50 ist es vorteilhaft, dass das Lastbett 65 keine Schwenkbewegung durchführen kann. Zu diesem Zweck wird der Hydraulikkreislauf gesperrt, so dass kein Hydraulikmedium zwischen den Zylindern 70a, 70b strömen kann. Hierdurch lässt sich das das Lastbett 65 in einer definierten Position relativ zum Unterbau 61 der Lastauflage 60 unbeweglich festlegen. Im Fahrbetrieb, bei dem die vorstehend beschriebene Ausgleichsbewegung ermöglicht sein soll, wird dann der Hydraulickreislauf und somit die beiden Zylinder 70a, 70b freigeschalten, so dass die durch deren Sperre des Hydraulikkreislaufs bewirkte Festlegung des Lastbetts 65 aufgehoben ist. Die Zylinder 70a, 70b sind somit während des Transports frei von sie beaufschlagenden Kräften.

## Patentansprüche

1. Vorrichtung zum Halten eines Endes (E) eines länglichen Objekts (O), insbesondere einer selbsttragenden Last, die ein Grundgestell (11) aufweist, auf dem eine Halterung (15), an welcher das längliche Objekt (O) befestigbar ist, schwenkbar angeordnet ist, und die mindestens eine Betätigungseinrichtung (20) aufweist, durch welche die Halterung (15) relativ zum Grundgestell (11) schwenkbar ist, wobei die Vorrichtung (10) einen das längliche Objekt (O) haltenden, an der Halterung (15) angeordneten Adapter (25) aufweist, **dadurch gekennzeichnet, dass** der Adapter (25) in mindestens einer
außermittigen Position an der Halterung (15) und zu dieser und somit zu einer Mittelebene der Vorrichtung (10) versetzt anordbar ist, und dass der Adapter (25) in diskreten Abständen oder kontinuierlich veränderbar außermittig an der Halterung (15) anordbar ist.

2. Vorrichtung nach einem der vorangehenden Ansprüche, **dadurch gekennzeichnet, dass** der Adapter (25) an der Halterung (15) mittels einer Schwenkeinrichtung (26) schwenkbar angeordnet ist.

3. Vorrichtung nach Anspruch 2, **dadurch gekennzeichnet, dass** die Schwenkeinrichtung (26) mindestens eine Schwenkeinheit (26a; 26b) besitzt, mittels derer der Adapter (25) außermittig an der Halterung (15) in mindestens zwei unterschiedlichen Positionen anordbar ist.

4. Vorrichtung nach einem der vorangehenden Ansprüche, **dadurch gekennzeichnet, dass** am Adapter (25) mindestens ein Schwenkelement (27a) der mindestens einen Schwenkeinheit (26a, 26b) und an der Halterung (15) mindestens ein komplementär hierzu ausgebildetes Schwenkelement (27b) dieser mindestens einen Schwenkeinheit (26a, 26b) vorgesehen ist, und dass mindestens eines der beiden Schwenkelemente (27a bzw. 27b) am anderen Schwenkelemente (27b bzw. 27a) in mindestens zwei Positionen anordbar ist.

5. Vorrichtung nach einem der vorangehenden Ansprüche, **dadurch gekennzeichnet, dass** das Schwenkelement (27a) und/oder das Schwenkelement (27b) der mindestens einen Schwenkeinheit (26a; 26b) mindestens zwei durch einen Zwischenraum (29) getrennte Lamellen (28) aufweist.

6. Vorrichtung nach einem der vorangehenden Ansprüche, **dadurch gekennzeichnet, dass** der Adapter (25) und/oder der Halterung (15) der Vorrichtung (10) mindestens ein Befestigungsmittel aufweist, durch welche mindestens ein Schwenkelement (27a, 27b) mindestens einer Schwenkeinheit (26a, 26b) in mindestens einer außermittigen Position am Adapter (25) und/oder an der Halterung (15) befestigbar ist.

7. Vorrichtung nach einem der vorangehenden Ansprüche, **dadurch gekennzeichnet, dass** die Halterung (15) mindestens ein Auflager (19a, 19b) für den Adapter (25) besitzt.

8. Vorrichtung nach einem der vorangehenden Ansprüche, **dadurch gekennzeichnet, dass** der Adapter (25) lösbar an der Halterung (15) angeordnet ist.

9. Vorrichtung nach einem der vorangehenden Ansprüche, **dadurch gekennzeichnet, dass** die Halterung (15) als ein Rahmen ausgebildet ist.

10. Fahrzeug zum Transport eines länglichen Objekts (O), das eine Vorrichtung (10) zum Halten eines Endes (E) des länglichen Objekts (O) aufweist, **dadurch gekennzeichnet, dass** die Vorrichtung (10) nach einem der Ansprüche 1 bis 9 ausgebildet ist.

11. Fahrzeug-Verbund zum Transport eines länglichen Objekts (O), welches ein ziehendes Fahrzeug (2, 3) und ein zu ziehendes Fahrzeug (50) aufweist, **dadurch gekennzeichnet, dass** am ziehenden Fahrzeug (2, 3) eine Vorrichtung (10) nach einem der Ansprüche 1 bis 9 vorhanden ist.

12. Fahrzeug-Verbund nach Anspruch 11, **dadurch gekennzeichnet, dass** am gezogenen Fahrzeug (50) eine schwenkbare Lastauflage (60) vorgesehen ist.

## Claims

1. Apparatus for retaining an end (E) of an elongate object (O), in particular a self-supporting load, which has a base frame (11) on which a retention member (15) to which the elongate object (O) can be secured is pivotably arranged and which has at least one actuation device (20), by means of which the retention member (15) can be pivoted relative to the base frame (11), wherein the apparatus (10) has an adapter (25) which retains the elongate object (O) and which is arranged on the retention member (15), **characterised in that** the adapter (25) can be arranged in at least one eccentric position on the retention member (15) and can be arranged offset relative thereto and consequently relative to a centre plane of the apparatus (10), and wherein the adapter (25) can be arranged with discrete spacings or in a continuously changeably eccentric manner on the retention member (15).

2. Apparatus according to either of the preceding claims, **characterised in that** the adapter (25) is pivotably arranged on the retention member (15) by means of a pivot device (26).

3. Apparatus according to claim 2, **characterised in that** the pivot device (26) has at least one pivot unit (26a; 26b) by means of which the adapter (25) can be arranged eccentrically on the retention member (15) in at least two different positions.

4. Apparatus according to any one of the preceding claims, **characterised in that** on the adapter (25) at least one pivot element (27a) of the at least one pivot unit (26a, 26b) and on the retention member (15) at least one complementary pivot element (27b) of this at least one pivot unit (26a, 26b) is provided, and **in that** at least one of the two pivot elements (27a or 27b) can be arranged on the other pivot elements (27b or 27a) in at least two positions, respectively.

5. Apparatus according to any one of the preceding claims, **characterised in that** the pivot element (27a) and/or the pivot element (27b) of the at least one pivot unit (26a; 26b) has at least two plates (28) which are separated by means of an intermediate space (29).

6. Apparatus according to any one of the preceding claims, **characterised in that** the adapter (25) and/or the retention member (15) of the apparatus (10) has at least one securing means by way of which at least one pivot element (27a, 27b) of at least one pivot unit (26a, 26b) can be secured in at least one eccentric position on the adapter (25) and/or on the retention member (15).

7. Apparatus according to any one of the preceding claims, **characterised in that** the retention member (15) has at least one support (19a, 19b) for the adapter (25).

8. Apparatus according to any one of the preceding claims, **characterised in that** the adapter (25) is releasably arranged on the retention member (15).

9. Apparatus according to any one of the preceding claims, **characterised in that** the retention member (15) is in the form of a frame.

10. Vehicle for transporting an elongate object (O) which has an apparatus (10) for retaining an end (E) of the elongate object (O), **characterised in that** the apparatus (10) is constructed according to any one of claims 1 to 9.

11. Vehicle assembly for transporting an elongate object (O), which has a towing vehicle (2, 3) and a vehicle (50) which is intended to be towed, **characterised in that** an apparatus (10) according to any one of claims 1 to 9 is present on the towing vehicle (2, 3).

12. Vehicle assembly according to claim 11, **characterised in that** a pivotable load support (60) is provided on the towed vehicle (50).

## Revendications

1. Dispositif pour le maintien d'une extrémité (E) d'un objet allongé (O), plus particulièrement d'une charge auto-porteuse, qui comprend un châssis de base (11), sur lequel est disposé de manière pivotante un support (15), auquel est fixé l'objet allongé (O) et qui comprend au moins un dispositif d'actionnement (20) grâce auquel le support (15) peut être pivoté par rapport au châssis de base (11), dans lequel le dispositif (10) comprend un adaptateur (25), disposé sur le support (15), qui maintient l'objet allongé (O), **caractérisé en ce que** l'adaptateur (25) peut être disposé dans au moins une position excentrée sur le support (15) et de manière décalée par rapport à celui-ci et donc à un plan central du dispositif (10) et **en ce que** l'adaptateur (25) peut être disposé à des distances discrètes ou de manière variable en continu de manière excentrée sur le support (15).

2. Dispositif selon l'une des revendications précédentes, **caractérisé en ce que** l'adaptateur (25) est disposé de manière pivotante sur le support (15) au moyen d'un dispositif de pivotement (26).

3. Dispositif selon la revendication 2, **caractérisé en ce que** le dispositif de pivotement (26) comprend au moins une unité de pivotement (26a ; 26b) au moyen de laquelle l'adaptateur (25) peut être disposé de manière excentrée sur le support (15) dans au moins deux positions différentes.

4. Dispositif selon l'une des revendications précédentes, **caractérisé en ce que**, sur l'adaptateur (25) est prévu au moins un élément de pivotement (27a) de l'au moins une unité de pivotement (26a, 26b) et, sur le support (15), est prévu au moins un élément de pivotement (27b), complémentaire à celui-ci, de cette au moins une unité de pivotement (26a, 26b) et **en ce qu'**au moins un des deux éléments de pivotement (27a respectivement 27b)peut être disposé sur l'autre élément de pivotement (27b respectivement 27a) dans au moins deux positions.

5. Dispositif selon l'une des revendications précédentes, **caractérisé en ce que** l'élément de pivotement (27a) et/ou l'élément de pivotement (27b) de l'au moins une unité de pivotement (26a ; 26b) comprend au moins deux lamelles (28) séparées par un espace intermédiaire (29).

6. Dispositif selon l'une des revendications précédentes, **caractérisé en ce que**, sur l'adaptateur (25) et/ou le support (15) du dispositif (10) comprend au moins un moyen de fixation grâce auquel au moins un élément de pivotement (27a, 27b) d'au moins une unité de pivotement (26a, 26b) peut être fixé dans au moins une position excentrée sur l'adaptateur (25) et/ou sur le support (15).

7. Dispositif selon l'une des revendications précédentes, **caractérisé en ce que** le support (15) comprend au moins un appui (19a, 19b) pour l'adaptateur (25).

8. Dispositif selon l'une des revendications précédentes, **caractérisé en ce que** l'adaptateur (25) est disposé de manière amovible sur le support (15).

9. Dispositif selon l'une des revendications précédentes, **caractérisé en ce que** le support (15) est conçu comme un cadre.

10. Véhicule pour le transport d'un objet allongé (O) qui comprend un dispositif (10) pour le maintien d'une extrémité (E) de l'objet allongé (O), **caractérisé en ce que** le dispositif (10) est conçu selon l'une des revendications 1 à 9.

11. Véhicule composite pour le transport d'un objet allongé (O) qui comprend un véhicule tracteur (2, 3) et un véhicule à tracter (50), **caractérisé en ce que**, sur le véhicule tracteur (2, 3), est prévu un dispositif (10) selon l'une des revendications 1 à 9.

12. Véhicule composite selon la revendication 11, **caractérisé en ce que**, sur le véhicule tracté (50), est prévu un support de charge pivotant (60).
